# EUROPÄISCHE PATENTANMELDUNG

(11) **EP 4 764 127 A1**
(43) Veröffentlichungstag der Anmeldung: **24.06.2026**
(21) Anmeldenummer: 25155465.5
(22) Anmeldetag: 03.02.2025
(51) Int. Cl.: E05B 47/00, E05B 63/04, F16P 3/08

(54) **VERRIEGELUNGS- UND ZUHALTESYSTEM**

(30) Priorität: 18.12.2024 DE 102024138619
(71) Anmelder: EUCHNER GmbH + Co. KG, 70771 Leinfelden-Echterdingen (DE)
(72) Erfinder: Grimm, Ilo, 71111 Waldenbuch (DE); Rehfuß, Anja, 70771 Leinfelden-Echterdingen (DE); Graubner, Anke, 70771 Leinfelden-Echterdingen (DE)
(74) Vertreter: Ruckh, Rainer Gerhard

(57) **Zusammenfassung**

Die Erfindung betrifft ein Verriegelungs- oder Zuhaltesystem (1) mit einer in einer Einbaulage stationär angeordneten Modulanordnung (2). Ein Verriegelungsmodul (7) der Modulanordnung (2) weist einen seitlich an der Modulanordnung (2) ausmündenden Anschlag (10) auf, der zur Aufnahme eines an einer Tür (4) angeordneten Griffmoduls (3) ausgebildet ist. Die Modulanordnung (2) weist wenigstens zwei Module auf, die in der Einbaulage der Modulanordnung (2) entlang deren Längsachse übereinander angeordnet sind. Der Anschlag (10) im Verriegelungsmodul (7) ist in zwei um 180° bezüglich einer senkrecht zur Längsachse der Modulanordnung (2) verlaufenden Drehachse gedrehten Einbaupositionen einbaubar, so dass der Anschlag (10) an einer rechten oder linken Seitenfläche der Modulanordnung (2) ausmündet.

## Beschreibung

Die Erfindung betrifft ein Verriegelungs- oder Zuhaltesystem.

Das Verriegelungs- oder Zuhaltesystem ist eine Sicherheitseinrichtung, die im Bereich der Maschinensicherheit eingesetzt wird.

Das Verriegelungs- oder Zuhaltesystem dient zur Absicherung eines Zugangs zu einem Gefahrenbereich an einer Anlage, wobei der Zugang mit einer trennenden Schutzeinrichtung, insbesondere einer eine Schutztür bildenden Tür, verschlossen werden kann.

Ein derartiges Verriegelungs- oder Zuhaltesystem kann ein Sicherheitszuhaltesystem ausbilden, wobei dieses eine Modulanordnung mit mehreren Modulen aufweist. Diese Modulanordnungen sind stationär, z.B. im Bereich eines Rahmens der Tür angeordnet. An der Tür selbst befindet sich ein Griffmodul. Befindet sich die Tür in ihrer Schließstellung, ist das Griffmodul in Eingriff mit einem Zuhaltemodul der Modulanordnung, wobei das Griffmodul in einem seitlich am Zuhaltemodul ausmündenden Anschlag liegt. Mittels des Zuhaltemoduls wird das Griffmodul in der Schließstellung der Tür zugehalten, so dass ein unkontrolliertes Öffnen der Tür und damit ein unkontrollierter Zugang zum Gefahrenbereich vermieden wird.

Ein derartiges Verriegelungs- oder Zuhaltesystem ist aus der DE 10 2015 101 133 A1 bekannt. Dieses Verriegelungs- oder Zuhaltesystem umfasst betrifft eine Modulanordnung mit wenigstens einem Grundmodul, welches an zwei verschiedenen Seiten jeweils ein Anschlussmodul aufweist, und mit wenigstens einem Funktionsmodul mit wenigstens einem Anschlussmodul. Die Anschlussmodule des Grundmoduls sind hinsichtlich ihrer mechanischen und elektrischen Anschlüsse drehinvariant ausgebildet, so dass durch Drehen des Grundmoduls wahlweise dessen erstes oder zweites Anschlussmodul am Anschlussmodul des Funktionsmoduls kontaktiert werden kann.

Das Grundmodul bildet das Zuhaltemodul aus und weist einen Anschlag als Aufnahme für ein Griffmodul der Tür auf.

Durch Drehen des Grundmoduls um 180° kann eine links- oder rechtsseitige Aufnahme des Griffmoduls realisiert werden, d.h. es können Applikationen abgedeckt werden, bei denen die Tür mit dem Griffmodul rechts oder links von der Modulanordnung angeordnet ist.

Nachteilig hierbei ist jedoch die relativ aufwändige elektrische Anschlusstechnik, um die Drehinvarianz des Grundmoduls zu erzielen.

Ein weiterer Nachteil entsteht dann, wenn das Grundmodul eine Mehrfachanordnung, insbesondere eine Linearanordnung von Bedienelementen aufweist. Bei Drehen des Grundmoduls wird auch die Reihenfolge der Bedienelemente gedreht, was für Benutzer des Verriegelungs- oder Zuhaltesystems störend und verwirrend ist.

In der DE 10 2015 101 133 A1 wird zur Lösung dieses Problems vorgeschlagen, die Bedienelemente auf einem Panel anzuordnen, das nach einer Drehung des Grundmoduls um 180° selbst um 180° gedreht wird, so dass wieder die ursprüngliche Reihenfolge der Bedienelemente erhalten wird.

Dies setzt jedoch eine entsprechende drehinvariante Ausbildung der elektrischen Anschlüsse für die Bedienelemente voraus, was zu einem weiter erhöhten Aufwand der elektrischen Anschlusstechnik des Verriegelungs- oder Zuhaltesystems führt.

Der Erfindung liegt die Aufgabe zugrunde, ein Verriegelungs- oder Zuhaltesystem mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Verriegelungs- oder Zuhaltesystem mit einer in einer Einbaulage stationär angeordneten Modulanordnung. Ein Verriegelungsmodul der Modulanordnung weist einen seitlich an der Modulanordnung ausmündenden Anschlag auf, der zur Aufnahme eines an einer Tür angeordneten Griffmoduls ausgebildet ist. Die Modulanordnung weist wenigstens zwei Module auf, die in der Einbaulage der Modulanordnung entlang deren Längsachse übereinander angeordnet sind. Der Anschlag im Verriegelungsmodul ist in zwei um 180° bezüglich einer senkrecht zur Längsachse der Modulanordnung verlaufenden Drehachse gedrehten Einbaupositionen einbaubar, so dass der Anschlag an einer rechten oder linken Seitenfläche der Modulanordnung ausmündet.

Das erfindungsgemäße Verriegelungs- oder Zuhaltesystem ist eine Sicherheitseinrichtung, die für den Einsatz im Bereich der Maschinensicherheit ausgebildet ist.

Dabei wird mittels des Verriegelungs- oder Zuhaltesystems eine Tür, die eine Schutztür bildet, oder allgemein eine trennende Schutzeinrichtung, in ihrer Schließstellung überwacht und gesichert. Dabei ist mit der Tür in ihrer Schließstellung ein Zugang zu einem Gefahrenbereich, insbesondere an einer Anlage verschlossen, so dass kein unkontrollierter Zugang zum Gefahrenbereich möglich ist.

Erfindungsgemäß weist das Verriegelungs- oder Zuhaltesystem eine Modulanordnung auf, die in einer Einbaulage stationär angeordnet ist. Insbesondere ist die Modulanordnung in einem Rahmen gelagert, in welchem die Tür beweglich angeordnet ist.

Die erfindungsgemäße Modulanordnung weist wenigstens zwei Module auf, die in der Einbaulage der Modulanordnung übereinander angeordnet sind. Insbesondere sind die Module entlang der in vertikaler Richtung verlaufenden Längsachse der Modulanordnung angeordnet.

Besonders vorteilhaft weist die Modulanordnung eine schmale langgestreckte Bauform auf, d.h. die einzelnen Module weisen eine geringe Breite auf, und zwar derart, dass diese Breiten kleiner sind als die Breite eines Rahmens, an dem die Modulanordnung montiert ist. Somit kann die Modulanordnung ohne seitliche Überstände an einem Rahmen, insbesondere einem Türrahmen montiert werden.

Die erfindungsgemäße Modulanordnung weist ein Verriegelungsmodul mit einem seitlich ausmündenden Anschlag auf. Erfindungsgemäß kann der Anschlag im Verriegelungsmodul in zwei um 180° bezüglich einer senkrecht zur Längsachse des Verriegelungsmoduls verlaufenden Drehachse gedrehten Einbaupositionen eingebaut werden, so dass der Anschlag je nach Einbauposition an einer rechten oder linken Seitenfläche des Verriegelungsmoduls und damit der Modulanordnung ausmündet.

Damit kann ein an der Tür angeordnetes Griffmodul, das Bestandteil des erfindungsgemäßen Verriegelungs- oder Zuhaltesystems ist, je nach Einbauposition des Anschlags von rechts oder links in Eingriff mit dem Anschlag gebracht werden, wenn die Tür in ihrer Schließposition eingefahren wird.

Durch die wahlweise Anordnung des Anschlags an der rechten oder linken Seitenfläche der Modulanordnung ist eine applikationsspezifische Anpassung des Verriegelungs- oder Zuhaltesystems derart möglich, dass die Tür rechts oder links zur Modulanordnung angeordnet sein kann.

Ein wesentlicher Vorteil der Erfindung besteht darin, dass für diese applikationsseitige Anpassung einer rechts oder links zur Modulanordnung angeordneten Tür mit Griffmodul weder die gesamte Modulanordnung noch das Verriegelungsmodul um 180° gedreht werden muss. Vielmehr muss mit dem Anschlag nur ein Bauteil oder eine Baugruppe im Verriegelungsmodul gedreht werden.

Damit bleibt bei dieser applikationsspezifischen Anpassung die Position des Verriegelungsmoduls in der Modulanordnung erhalten. Ebenfalls bleibt die Anordnung der Modulanordnung mit allen Modulen erhalten.

Damit brauchen keine drehinvarianten elektrischen Anschlüsse zwischen dem Verriegelungsmodul und weiteren Modulen der Modulanordnung vorgesehen werden, da die Orientierungen der Module relativ zueinander immer gleichbleiben.

Auch die Anordnung von Bedienelementen an Modulen bleibt erhalten, was äußerst benutzerfreundlich ist.

Gemäß einer vorteilhaften Ausführungsform der Erfindung weist das Griffmodul einen Riegel auf, der in einer Schließstellung der Tür in eine Verriegelungsposition im Verriegelungsmodul eingefahren ist.

Mit dem Riegel ist die Tür in ihrer Schließstellung verriegelt.

Besonders vorteilhaft weist das Verriegelungs- oder Zuhaltesystem eine Zuhalteeinrichtung auf, mittels derer der Riegel in der Verriegelungsposition zugehalten ist.

Durch die Zuhaltung wird der Riegel in seiner Verriegelungsposition gesichert, so dass ein Öffnen der Tür nur gegen eine von der Zuhalteeinrichtung bewirkten Zuhaltekraft möglich ist.

Gemäß einer konstruktiv vorteilhaften Ausgestaltung weist das Verriegelungsmodul ein den Anschlag aufweisendes Klinkenmodul auf, welches in zwei um 180° gegeneinander gedrehten Einbaupositionen im Verriegelungsmodul einbaubar ist.

Das Klinkenmodul bildet eine kompakte Baueinheit, die ohne großen konstruktiven Aufwand in den beiden Einbaupositionen im Verriegelungsmodul montiert werden kann.

Vorteilhaft weist das Klinkenmodul eine Klinkenanordnung auf.

Dabei weist die Klinkenanordnung zwei gelenkig gekoppelte Klinken auf, die symmetrisch bezüglich einer senkrecht zur Längsachse orientierten Symmetrieebene sind.

Die Funktionsweise der Klinkenanordnung ist derart, dass abhängig von der Einbauposition des Klinkenmoduls eine der Klinken in Eingriff mit einem Zuhalteelement ist, mittels dessen die Klinkenmodule in eine Zuhalteposition überführbar ist. In der Zuhalteposition bewirkt die Klinkenanordnung eine Zuhaltung des Riegels in der Verriegelungsposition.

Durch die symmetrische Ausbildung der Klinken der Klinkenanordnung ist gewährleistet, dass in beiden Einbaupositionen des Anschlags das Zuhalteelement in gleicher Weise in Eingriff mit dem Zuhalteelement ist.

Das Zuhalteelement ist Bestandteil der Zuhalteeinrichtung. Als weiterer Bestandteil ist eine Steuerung des Zuhalteelements vorgesehen. Hierzu weist die Modulanordnung ein Steuermodul auf, mittels dessen eine Zuhaltung bewirkt oder aufgehoben werden kann.

Dabei weist vorteilhaft das Steuermodul ein Betätigungselement auf, mittels dessen das Zuhalteelement bewegbar ist.

Insbesondere ist das Betätigungselement ein Hubmagnet.

Der Hubmagnet führt elektronisch gesteuerte Hubbewegungen durch, mittels derer die Zuhaltung bewirkt oder aufgehoben werden kann.

Vorteilhaft wird der Hubmagnet von einer Rechnereinheit gesteuert, die im Steuermodul integriert ist.

Gemäß einer vorteilhaften Ausgestaltung wird die Verriegelungsposition des Riegels mittels eines RFID-Systems erfasst und kontrolliert.

Dabei weist das RFID-System einen im Riegel angeordneten Transponder und eine im Verriegelungsmodul angeordnete RFID-Leseeinheit auf.

Die RFID-Leseeinheit kann dann, wenn sich die Tür in der Schließstellung befindet und damit der Transponder im Riegel sich innerhalb des Lesebereichs der RFID-Leseeinheit befindet, Daten aus dem Transponder auslesen, wodurch die Schließstellung der Tür erkannt wird.

Diese Auswertung kann in der im Steuermodul integrierten Rechnereinheit oder in einer externen Rechnereinheit erfolgen.

Vorteilhaft generiert die Modulanordnung Ausgangssignale, mit der die überwachte Anlage gesteuert wird. Dabei wird insbesondere der Betrieb der Anlage nur dann freigegeben, wenn die Tür in ihrer Schließstellung erkannt wird oder wenn zusätzlich die Zuhaltung der Tür bewirkt ist.

Gemäß einer vorteilhaften Ausgestaltung weist die Modulanordnung neben dem Verriegelungsmodul und dem Steuermodul weitere Module auf. Beispielsweise kann die Modulanordnung ein Submodul aufweisen.

Vorteilhaft weist das Submodul eine Anordnung von Bedienelementen auf.

Die Bedienelemente können von Tasten oder auch einem Not-Aus-Schalter gebildet sein.

Da für einen Wechsel der Einbauposition des Anschlags des Verriegelungsmoduls die Einbauposition des Verriegelungsmoduls nicht geändert werden muss, bleibt die Zuordnung des Verriegelungsmoduls zum Submodul erhalten und die Lagen der Bedienelemente bleiben unverändert.

Gemäß einer vorteilhaften Weiterbildung der Erfindung weist das Verriegelungs- oder Zuhaltesystem eine Fluchtentriegelung auf.

Vorteilhaft ist die Fluchtentriegelung von einer manuell betätigbaren Türklinke am Griffmodul gebildet.

Ist bei einem Stromausfall eine Person im Gefahrenbereich und ist die Tür durch eine bewirkte Zuhaltung verriegelt, so kann die Person durch Betätigung der Fluchtentriegelung die Zuhaltung auf mechanischem Weg lösen, die Tür öffnen und aus dem Gefahrenbereich herausgelangen.

Die Erfindung wird im Folgenden anhand der Zeichnungen erläutert. Es zeigen:
- Figur 1:: Ausführungsbeispiel des erfindungsgemäßen Verriegelungs- oder Zuhaltesystem mit einer an einem Rahmen gelagerten Modulanordnung und einem an einer Tür gelagerten Griffmodul.
- Figur 2:: Modulanordnung des Verriegelungs- oder Zuhaltesystems gemäß Figur 1.
- Figuren 3a-3f:: Darstellungen der Modulanordnung bei einem Wechsel der Einbauposition eines Anschlags im Verriegelungsmodul.
- Figur 4:: Teildarstellung der Modulanordnung gemäß den Figuren 2 und 3a bis 3f.
- Figuren 5a, 5b:: Teildarstellung der Modulanordnung gemäß Figur 4 mit zugeordnetem Griffmodul
a) bei geschlossener und verriegelter Tür.
b) bei geöffneter Tür.
- Figur 6:: Einzeldarstellung des Klinkenmoduls des Verriegelungsmoduls der Modulanordnung gemäß Figur 4 mit Klinken einer Klinkenanordnung
a) im verriegelten Zustand in einer ersten Einbauposition des Klinkenmoduls.
b) im verriegelten Zustand in einer zweiten Einbauposition des Klinkenmoduls.
a) im entriegelten Zustand.

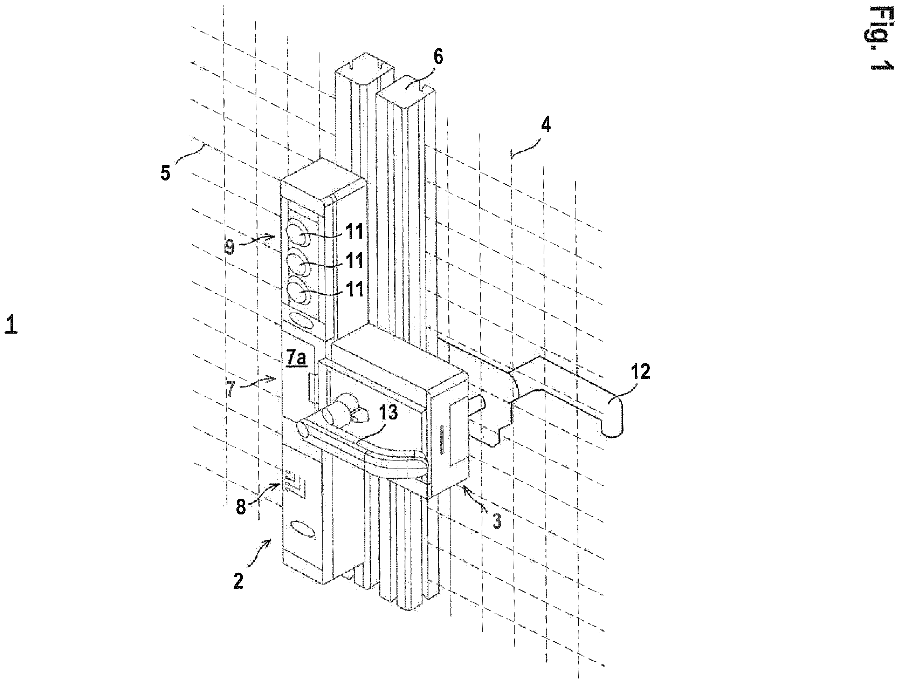

Figur 1 zeigt ein Ausführungsbeispiel des erfindungsgemäßen Verriegelungs- oder Zuhaltesystems 1. Das Verriegelungs- oder Zuhaltesystem 1 umfasst eine stationär angeordnete Modulanordnung 2 und ein Griffmodul 3, das an einer Tür 4, die eine Schutztür ausbildet, beweglich angeordnet ist.

Mit dem Verriegelungs- oder Zuhaltesystem 1 wird ein Gefahrenbereich einer Anlage gesichert, wobei der Gefahrenbereich mit einer Umzäunung 5 eingezäunt ist. Ein Zugang zum Gefahrenbereich kann mit der Tür 4 verschlossen werden.

Die Modulanordnung 2 ist, wie in Figur 1 dargestellt, an einem den Zugang begrenzenden Rahmen 6 befestigt. Die Längsachse der Modulanordnung 2 verläuft in vertikaler Richtung. Die Breite der Modulanordnung 2 ist kleiner oder gleich der Breite. Die Breite der Modulanordnung 2 und bevorzugt auch deren Bautiefe liegt vorteilhaft im Bereich zwischen 5 und 6 cm.

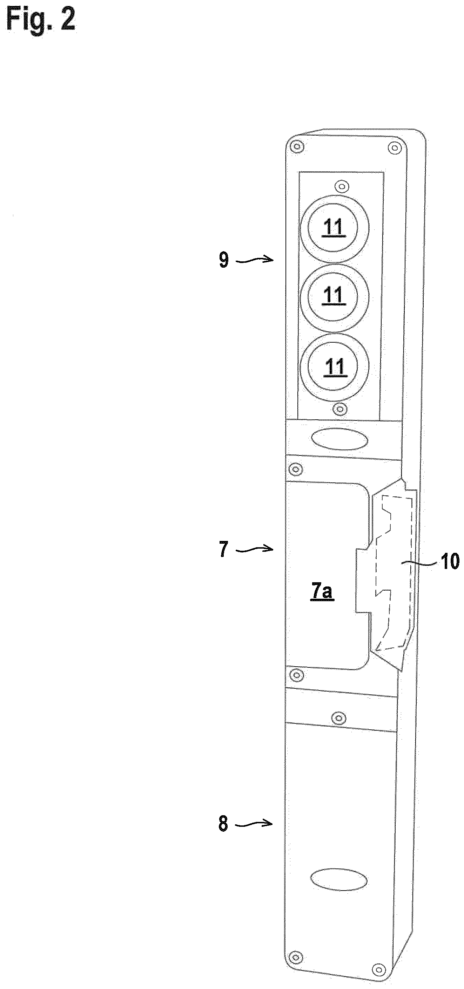

Die Modulanordnung 2, die in Figur 2 in einer Einzeldarstellung dargestellt ist, weist im vorliegenden Fall drei Module auf, was jedoch nicht zwingend ist.

Generell sind die Module der Modulanordnung 2 in Richtung deren Längsachse übereinander angeordnet.

Die Module sind über nicht dargestellte Verbindungselemente mechanisch verbunden und über ebenfalls nicht dargestellte elektrische Anschlüsse elektrisch verbunden.

Die Modulanordnung 2 weist ein Verriegelungsmodul 7 auf, an dessen Unterseite ein Steuermodul 8 anschließt und an dessen Oberseite ein Submodul 9 anschließt.

Das Verriegelungsmodul 7 weist einen Anschlag 10 in Form einer muldenförmigen Aufnahme auf. Bei der Anordnung der Figuren 1 und 2 mündet der Anschlag 10 an der rechten Seite der Modulanordnung 2 aus, angepasst an die zur rechten Seite der Modulanordnung 2 anschließenden Tür 4.

Befindet sich die Tür 4 in ihrer Schließstellung, ist das Griffmodul 3 im Anschlag 10 gelagert. Damit befindet sich das Griffmodul 3 in einer Verriegelungsposition. In dieser Verriegelungsposition wird das Griffmodul 3 verriegelt und zugehalten, wobei die Zuhaltung elektronisch gesteuert ist. Die hierfür notwendigen Elemente befinden sich im Steuermodul 8.

Das Submodul 9 weist Bedienelemente in Form von Tasten 11 auf, mittels derer bestimmte Funktionen des Verriegelungs- oder Zuhaltesystems 1 aktiviert und deaktiviert werden können.

Damit bei einem Stromausfall eine Person im Gefahrenbereich die Tür 4 mechanisch öffnen kann, um den Gefahrenbereich zu verlassen, ist an der dem Gefahrenbereich zugewandten Seite des Griffmoduls 3 eine Fluchtentriegelung in Form einer mechanisch betätigbaren Türklinke 12 vorgesehen. Auch an der Außenseite des Griffmoduls 3 befindet sich eine Türklinke 13.

Erfindungsgemäß kann die Einbauposition des Anschlags 10 im Verriegelungsmodul 7 derart geändert werden, dass der Anschlag 10 wahlweise an der rechten oder linken Seite der Modulanordnung 2 ausmündet, je nachdem ob die Tür 4 zur rechten oder linken Seite der Modulanordnung 2 anschließt.

Die Änderung der Einbauposition des Anschlags 10 im Verriegelungsmodul 7 kann insbesondere auch bei am Rahmen 6 befestigter Modulanordnung 2 durchgeführt werden.

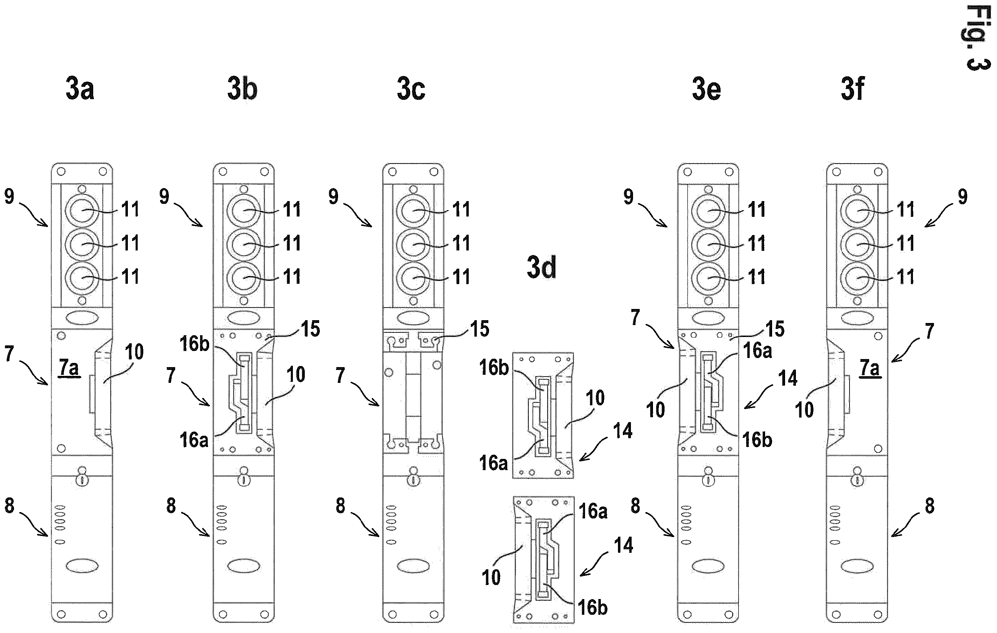

Die Figuren 3a bis 3f zeigen die einzelnen Phasen bei der Änderung der Einbauposition des Anschlags 10.

Figur 3a zeigt (entsprechend zu Figur 2) die Ausgangssituation, bei welcher das Verriegelungsmodul 7 mit einem Deckel 7a abgeschlossen ist. Der Anschlag 10 mündet an der rechten Seite der Modulanordnung 2 aus.

In einem ersten Schritt wird der Deckel 7a vom Verriegelungsmodul 7 abgenommen (Figur 3b). Damit liegt ein Klinkenmodul 14 des Verriegelungsmoduls 7 frei, das in einem Einsatz 15 des Verriegelungsmoduls 7 gelagert ist. Das Klinkenmodul 14 weist eine Klinkenanordnung mit zwei Klinken 16a, 16b auf.

Danach wird das Klinkenmodul 14 aus dem Verriegelungsmodul 7 ausgebaut (Figur 3c).

Anschließend wird das Klinkenmodul 14 bezüglich einer senkrecht zur Längsachse verlaufenden Drehachse um 180° gedreht (Figur 3d).

Danach wird das gedrehte Klinkenmodul 14 wieder im Verriegelungsmodul 7 eingebaut (Figur 3e).

Abschließend wird der Deckel 7a auf dem Verriegelungsmodul 7 montiert (Figur 3f).

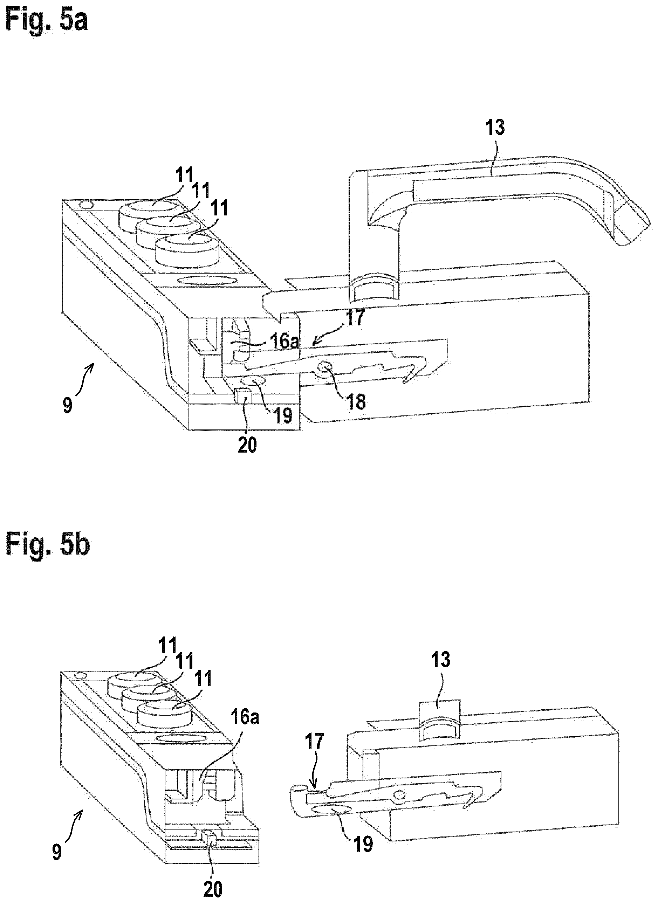

Die Figuren 5a, 5b zeigen eine Schnittdarstellung des Verriegelungsmoduls 7 und des Griffmoduls 3 bei geschlossener und verriegelter Tür 4 (Figur 5a) und bei geöffneter Tür 4 (Figur 5b).

Das Griffmodul 3 weist einen über dessen der Modulanordnung 2 zugeordneten Frontseite hervorstehenden Riegel 17 auf, der bezüglich einer Kippachse 18 kippbar gelagert ist. In dem über das Griffmodul 3 hervorstehende Ende des Riegels 17 ist ein Transponder 19 gelagert.

Korrespondierend hierzu befindet sich im Verriegelungsmodul 7 eine RFID-Leseeinheit 20. Befindet sich die Tür 4 in ihrer Schließstellung, befindet sich der Transponder 19 im Lesebereich der RFID-Leseeinheit 20, so dass mit der RFID-Leseeinheit 20 Daten aus dem Transponder 19 ausgelesen werden. Dadurch wird die Schließstellung der Tür 4 erfasst und kontrolliert.

In der Schließstellung der Tür 4 befindet sich das Griffmodul 3 mit dem Riegel 17 in einer Verriegelungsposition. In dieser Verriegelungsposition greift der Riegel 17 in eine Klinke 16a des Verriegelungsmoduls 7 und wird dadurch verriegelt und in der Verriegelungsposition zugehalten.

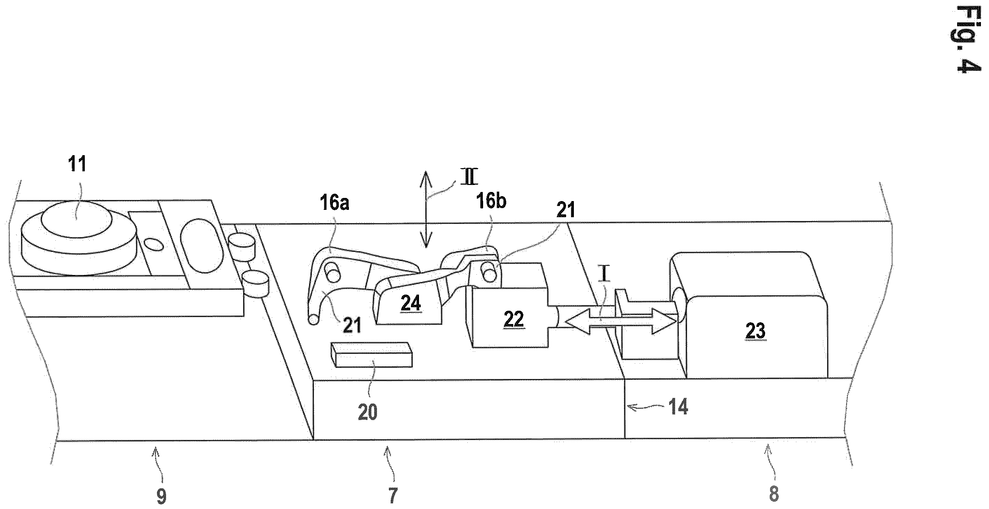

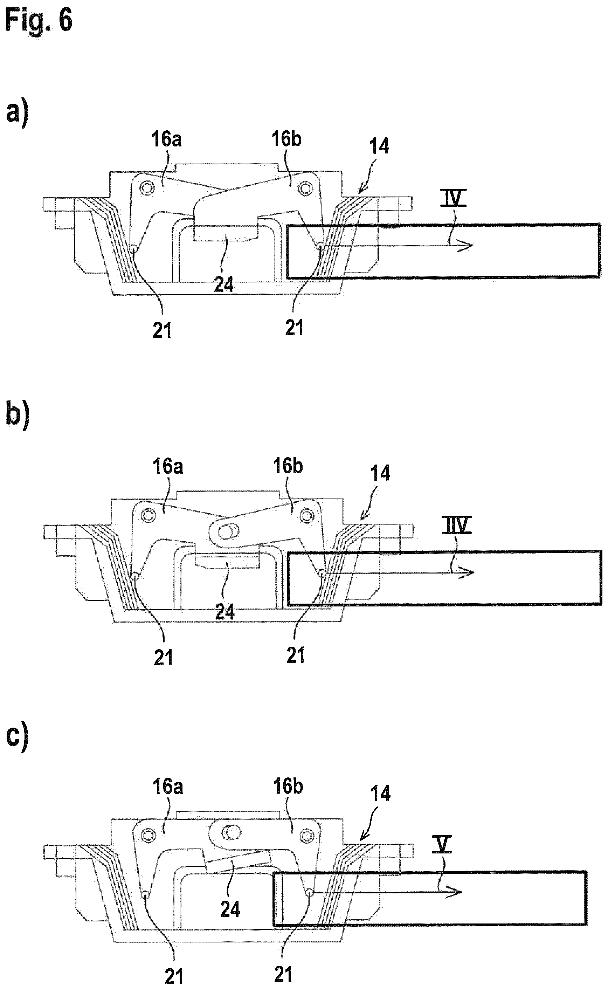

Zur Zuhaltung des Riegels 17 in der Verriegelungsposition ist eine Zuhalteeinrichtung vorgesehen, die in den Figuren 4 und 6a, 6 b veranschaulicht ist.

Die Klinkenanordnung des Verriegelungsmoduls 7 besteht aus zwei gelenkig gekoppelten identisch ausgebildeten Klinken 16a, 16b. Diese Klinkenanordnung ist drehsymmetrisch bezüglich einer Drehung um 180° bezüglich einer senkrecht zur Längsachse der Modulanordnung 2 verlaufenden Drehachse.

Jede Klinke 16a, 16b weist eine Nase 21 auf, wobei je nach Einbauposition des Klinkenmoduls 14 im Verriegelungsmodul 7 die Nase 21einer der Klinken 16a, 16b in Eingriff mit einem Mitnehmer 22 ist.

Der Mitnehmer 22 ist an ein elektrisches Antriebssystem im Steuermodul 8 angekoppelt. Im vorliegenden Fall weist das Antriebssystem einen Hubmagneten 23 auf, mittels dessen eine Stellbewegung durchführbar ist, die auf den Mitnehmer 22 übertragen wird. Die Stellbewegung ist mit dem Doppelpfeil I gekennzeichnet.

Durch diese Stellbewegung wird ein Klinkenhub (Doppelpfeil II) ermöglicht, d.h. Körperteile 24 der Klinken 16a, 16b werden angehoben oder abgesenkt.

Dadurch kann die Zuhaltung des Riegels 17 bewirkt oder gelöst werden. Dies ist in den Figuren 6a bis 6c veranschaulicht.

Figur 6a zeigt die Klinkenanordnung in einer ersten Einbauposition des Klinkenmoduls 14 im Verriegelungsmodul 7. Figur 6b zeigt die Klinkenanordnung in der zweiten Einbauposition des Klinkenmoduls 14 im Verriegelungsmodul 7. In beiden Fällen wird durch den Hubmagneten 23 der Mitnehmer 22 nach rechts gezogen (Pfeil IV), wodurch die Körperteile 24 der Klinken 16a, 16b abgesenkt werden, wodurch die Zuhaltung des Riegels 17 bewirkt wird.

Durch eine Bewegung des Mitnehmers 22 in entgegensetzender Richtung (Pfeil V in Figur 6c) wird die Zuhaltung des Riegels 17 aufgehoben.

Die Zuhalteeinrichtung kann von einer Rechnereinheit gesteuert werden. Ebenso können in einer oder der Rechnereinheit die mit der RFID-Leseeinheit 20 ausgelesenen Daten ausgewertet werden. Diese Rechnereinheit kann im Steuermodul 8 integriert sein oder eine externe Einheit bilden.

### Bezugszeichenliste

- (1): Verriegelungs- oder Zuhaltesystem
- (2): Modulanordnung
- (3): Griffmodul
- (4): Tür
- (5): Umzäunung
- (6): Rahmen
- (7): Verriegelungsmodul
- (7a): Deckel
- (8): Steuermodul
- (9): Submodul
- (10): Anschlag
- (11): Taste
- (12): Türklinke
- (13): Türklinke
- (14): Klinkenmodul
- (15): Einsatz
- (16a): Klinke
- (16b): Klinke
- (17): Riegel
- (18): Kippachse
- (19): Transponder
- (20): RFID-Leseeinheit
- (21): Nase
- (22): Mitnehmer
- (23): Hubmagnet
- (24): Körperteil
- (I): Doppelpfeil
- (II): Doppelpfeil
- (IV): Pfeil
- (IIV): Pfeil
- (V): Pfeil

## Patentansprüche

1. Verriegelungs- oder Zuhaltesystem (1) mit einer in einer Einbaulage stationär angeordneten Modulanordnung (2), wobei ein Verriegelungsmodul (7) der Modulanordnung (2) einen seitlich an der Modulanordnung (2) ausmündenden Anschlag (10) aufweist, der zur Aufnahme eines an einer Tür (4) angeordneten Griffmoduls (3) ausgebildet ist, **dadurch gekennzeichnet, dass** die Modulanordnung (2) wenigstens zwei Module aufweist, die in der Einbaulage der Modulanordnung (2) entlang deren Längsachse übereinander angeordnet sind, und dass der Anschlag (10) im Verriegelungsmodul (7) in zwei um 180° bezüglich einer senkrecht zur Längsachse der Modulanordnung (2) verlaufenden Drehachse gedrehten Einbaupositionen einbaubar ist, so dass der Anschlag (10) an einer rechten oder linken Seitenfläche der Modulanordnung (2) ausmündet.

2. Verriegelungs- oder Zuhaltesystem (1) nach Anspruch 1, **dadurch gekennzeichnet, dass** das Griffmodul (3) einen Riegel (17) aufweist, der in einer Schließstellung der Tür (4) in eine Verriegelungsposition im Verriegelungsmodul (7) eingefahren ist.

3. Verriegelungs- oder Zuhaltesystem (1) nach einem der Ansprüche 1 oder 2, **dadurch gekennzeichnet, dass** dieses eine Zuhalteeinrichtung aufweist, mittels derer der Riegel (17) in der Verriegelungsposition zugehalten ist.

4. Verriegelungs- oder Zuhaltesystem (1) nach Anspruch 3, **dadurch gekennzeichnet, dass** die Modulanordnung (2) ein Steuermodul (8) aufweist, mittels dessen eine Zuhaltung bewirkt oder aufgehoben werden kann.

5. Verriegelungs- oder Zuhaltesystem (1) nach einem der Ansprüche 1 bis 4, **dadurch gekennzeichnet, dass** das Verriegelungsmodul (7) ein den Anschlag (10) aufweisendes Klinkenmodul (14) aufweist, welches in zwei um 180° gegeneinander gedrehten Einbaupositionen im Verriegelungsmodul (7) einbaubar ist.

6. Verriegelungs- oder Zuhaltesystem (1) nach einem der Ansprüche 4 und 5, **dadurch gekennzeichnet, dass** das Klinkenmodul (14) eine Klinkenanordnung aufweist.

7. Verriegelungs- oder Zuhaltesystem (1) nach Anspruch 6, **dadurch gekennzeichnet, dass** die Klinkenanordnung zwei gelenkig gekoppelte Klinken (16a, 16b) aufweist, die symmetrisch bezüglich einer senkrecht zur Längsachse orientierten Symmetrieebene sind.

8. Verriegelungs- oder Zuhaltesystem (1) nach Anspruch 7, **dadurch gekennzeichnet, dass** abhängig von der Einbauposition des Klinkenmoduls (14) eine der Klinken (16a, 16b) in Eingriff mit einem Zuhalteelement ist, mittels dessen die Klinkenmodule (14) in eine Zuhalteposition überführbar ist, wobei in der Zuhalteposition die Klinkenanordnung eine Zuhaltung des Riegels (17) in der Verriegelungsposition bewirkt.

9. Verriegelungs- oder Zuhaltesystem (1) nach einem der Ansprüche 4 und 8, **dadurch gekennzeichnet, dass** das Steuermodul (8) ein Betätigungselement aufweist, mittels dessen das Zuhalteelement bewegbar ist.

10. Verriegelungs- oder Zuhaltesystem (1) nach Anspruch 9, **dadurch gekennzeichnet, dass** das Betätigungselement ein Hubmagnet (23) ist.

11. Verriegelungs- oder Zuhaltesystem (1) nach einem der Ansprüche 3 bis 10, **dadurch gekennzeichnet, dass** die Verriegelungsposition des Riegels (17) mittels eines RFID-Systems erfasst und kontrolliert wird.

12. Verriegelungs- oder Zuhaltesystem (1) nach Anspruch 11, **dadurch gekennzeichnet, dass** das RFID-System einen im Riegel (17) angeordneten Transponder (19) und eine im Verriegelungsmodul (7) angeordnete RFID-Leseeinheit (20) aufweist.

13. Verriegelungs- oder Zuhaltesystem (1) nach einem der Ansprüche 9 und 12, **dadurch gekennzeichnet, dass** das Steuermodul (8) eine Rechnereinheit zur Steuerung des Betätigungselements und/oder zur Auswertung von mit der RFID-Leseeinheit (20) gelesenen Daten des Transponders (19) aufweist.

14. Verriegelungs- oder Zuhaltesystem (1) nach einem der Ansprüche 1 bis 13, **dadurch gekennzeichnet, dass** die Modulanordnung (2) am Rahmen (6) einer Tür (4) montiert ist, wobei die Breite der Modulanordnung (2) kleiner oder gleich der Breite des Rahmens (6) ist, und/oder dass die Modulanordnung (2) ein Submodul (9) aufweist, wobei insbesondere das Submodul (9) eine Anordnung von Bedienelementen aufweist.

15. Verriegelungs- oder Zuhaltesystem (1) nach einem der Ansprüche 1 bis 16, **dadurch gekennzeichnet, dass** dieses eine Fluchtentriegelung aufweist, und/oder dass eine Fluchtentriegelung in Form einer manuell betätigbaren Türklinke (12) am Griffmodul (3) vorhanden ist.
